(19) Europäisches Patentamt / European Patent Office / Office européen des brevets

(11) **EP 4 090 054 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **21173320.9**

(22) Anmeldetag: **11.05.2021**

(51) Internationale Patentklassifikation (IPC):
**H04W 4/40** *(2018.01)*

(52) Gemeinsame Patentklassifikation (CPC):
**H04W 4/40**

(54) **VERFAHREN ZUM ÜBERMITTELN EINES NACHRICHTENINHALTS MITTELS EINER MEHRZAHL VON BROADCAST-NACHRICHTEN ZUR ABDECKUNG EINES GEOGRAPHISCHEN GEBIETS, SYSTEM, SENDER UND EMPFÄNGER, COMPUTERPROGRAMM UND COMPUTERLESBARES MEDIUM**

METHOD FOR TRANSMITTING THE CONTENTS OF MESSAGE BY MEANS OF A PLURALITY OF BROADCAST MESSAGES TO COVER A GEOGRAPHICAL AREA, SYSTEM, TRANSMITTER AND RECEIVER, COMPUTER PROGRAM AND COMPUTER READABLE MEDIUM

PROCÉDÉ DE TRANSMISSION DU CONTENU DE MESSAGE AU MOYEN D'UN PLURALITÉ DE MESSAGES DIFFUSÉS PERMETTANT DE COUVRIR UNE ZONE GÉOGRAPHIQUE, SYSTÈME, ÉMETTEUR ET RÉCEPTEUR, PROGRAMME INFORMATIQUE ET SUPPORT LISIBLE PAR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.11.2022   Patentblatt 2022/46**

(73) Patentinhaber: **Deutsche Telekom AG**
**53113 Bonn (DE)**

(72) Erfinder:
• **WITYCH, Michael, Dr.**
  **53227 Bonn (DE)**
• **SUDHOLT, Frank**
  **53604 Bad Honnef (DE)**

• **SCHMITT, Florian-Leon**
  **53227 Bonn (DE)**

(74) Vertreter: **Schwöbel, Thilo K. et al**
**Kutzenberger Wolff & Partner**
**Waidmarkt 11**
**50676 Köln (DE)**

(56) Entgegenhaltungen:
**US-A1- 2008 186 206      US-A1- 2013 099 941**

• **MAIHOFER C: "A survey of geocast routing protocols", IEEE COMMUNICATIONS SURVEYS & TUTORIALS, IEEE, USA, Bd. 2, Nr. 2, 1. April 2004 (2004-04-01), Seiten 32-42, XP011285491, ISSN: 1553-877X**

**Beschreibung**

Stand der Technik

Die Erfindung betrifft ein Verfahren zum Übermitteln eines Nachrichteninhalts mittels einer Mehrzahl von Broadcast-Nachrichten zur Abdeckung eines geographischen Gebiets, wobei ein Sender wenigstens eine initiale Broadcast-Nachricht überträgt, wobei der Nachrichteninhalt von dem Sender an eine Mehrzahl von Empfängern als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird, wobei der Sender ein Funkabdeckungsgebiet aufweist, innerhalb welchem ein Empfang von gesendeten Broadcast-Nachrichten durch die Empfänger möglich ist.

Die Erfindung betrifft des Weiteren ein Telekommunikationsnetz oder System zum Übermitteln eines Nachrichteninhalts mittels einer Mehrzahl von Broadcast-Nachrichten zur Abdeckung eines geographischen Gebiets, wobei ein Sender wenigstens eine initiale Broadcast-Nachricht überträgt, wobei der Nachrichteninhalt von dem Sender an eine Mehrzahl von Empfängern als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird, wobei der Sender ein Funkabdeckungsgebiet aufweist, innerhalb welchem ein Empfang von gesendeten Broadcast-Nachrichten durch die Empfänger möglich ist.

Die Erfindung betrifft ferner einen Sender oder Empfänger zur Verwendung in erfindungsgemäßen Telekommunikationsnetz oder einem erfindungsgemäßen System.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei vorbekannten Telekommunikationsnetzen ist es bereits bekannt, eine Gerät-zu-Gerät-Kommunikation (device-to-device communication) zu verwenden. Hierbei tritt jedoch insbesondere das Problem einer sehr großen bzw. zu großen Anzahl von Nachrichten auf, insbesondere wenn Nachrichteninhalte in Form von Kettennachrichten übertragen werden. Aus der US 2013/0099941 A1 ist ein Verfahren bekannt, bei dem über Geocast-Nachrichten in einem Ad-hoc-Netzwerk aus Fahrzeugen Informationen über die lokale Umgebung abgefragt werden, wobei jedes Fahrzeug, das eine Anfrage empfängt, auf Grundlage von heuristische Kriterien entscheidet, ob die empfangene Anfrage an andere Fahrzeuge weitergeleitet wird. Weiterhin wird in dem Artikel "A survey of geocast routing protocols," (Maihöfer et al., IEEE Commun. Surveys Tuts., vol. 6, no. 2, pp. 32-42, 2nd Quart. 2004) in Überblick über verschiedene Geocast-Routing-Protokolle gegeben.

Offenbarung der Erfindung

Der Erfindung liegt die Aufgabe zugrunde, ein Verfahren zum Übermitteln eines Nachrichteninhalts mittels einer Mehrzahl von Broadcast-Nachrichten zur Abdeckung eines geographischen Gebiets anzugeben, wobei ein Sender wenigstens eine initiale Broadcast-Nachricht überträgt, wobei der Nachrichteninhalt von dem Sender an eine Mehrzahl von Empfängern als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird, wobei es das Verfahren in vergleichsweise einfacher und effizienter Weise ermöglicht, ein Funkabdeckungsgebiet effektiv und mit einer vergleichsweise kleinen Anzahl von übermittelten Nachrichten möglichst vollständig abzudecken.

Die Aufgabe wird erfindungsgemäß gelöst durch ein Verfahren gemäß Anspruch 1.

Es ist dadurch gemäß der vorliegenden Erfindung in vorteilhafter Weise möglich, dass in vergleichsweise einfacher Art und Weise zum einen das vorgegebene geographische Gebiet effektiv abgedeckt wird (d.h. der Nachrichteninhalt an die relevanten Empfänger innerhalb des geographischen Gebiets übermittelt wird) und zum anderen die Anzahl der hierzu verwendeten bzw. benötigten Nachrichten vergleichsweise klein gehalten werden kann. Erfindungsgemäß ist es insbesondere möglich, ein Mesh-Verfahren für Broadcast Kettennachrichten mit beweglichen Vehicle Broadcast Sendern zur Benachrichtigung abgegrenzter geographischer Gebiete unter Minimierung der Anzahl an notwendigen Broadcast Nachrichten zur Verfügung zu stellen. Insbesondere ist erfindungsgemäß eine Kommunikation nach der PC5-Sidelink Spezifikation - wie für LTE realisiert - hierzu geeignet.

Erfindungsgemäß ist vorteilhaft möglich, eine gebietsspezifisch gezielte dezentrale Verbreitung von Informationen in geographische Gebiete hinein durch ausgewählte Kommunikationseinrichtungen zu realisieren, ohne dass die MSISDN der Empfänger bekannt sind. Ausgewählte Kommunikationseinrichtungen bedeutet hierbei insbesondere zum einen erreichbare und zum anderen zur Lösung einen Beitrag liefernde statische oder kinematische Kommunikationseinrichtungen. Diese Kommunikationseinrichtungen besitzen Empfänger- und Sender-Eigenschaften zugleich. Die Kommunikation erfolgt über Broadcast.

Gemäß der vorliegenden Erfindung ist es vorgesehen, dass zum Übermitteln eines Nachrichteninhalts eine Mehrzahl von Broadcast-Nachrichten verwendet werden. Der Nachrichteninhalt soll hierdurch innerhalb eines geographischen Gebiets verteilt werden. Ein Sender überträgt wenigstens eine initiale Broadcast-Nachricht (mit dem Nachrichteninhalt) an eine Mehrzahl von Empfängern als Broadcast-Nachricht. Dies erfolgt erfindungsgemäß mittels einer D2D-Funktionalität, device-to-device-Funktionalität oder mittels einer PC5-Sidelink Funktionalität, insbesondere unter Nutzung der Mode-4-Funktionalität. Der Sender weist hierbei ein Funkabdeckungsgebiet auf, innerhalb dessen ein Empfang von gesendeten Broadcast-Nachrichten durch dort befindliche Empfänger möglich ist. Erfindungsgemäß soll das geographische Gebiet möglichst effektiv abgedeckt werden, wobei hierfür in einem ersten Schritt der Sender die initiale Broadcast-Nachricht umfassend den Nachrichteninhalt und eine initiale Zusatzinformation sendet und ein erster Empfänger die initiale Broadcast-Nachricht empfängt. In einem nachfolgenden zweiten Schritt senden die jeweiligen Empfänger - als weitere Sender - jeweils weitere Broadcast-Nachrichten, wobei die weiteren Broadcast-Nachrichten den Nachrichteninhalt und jeweils weitere Zusatzinformationen zur Abdeckung des geographischen Gebiets umfassen.

Beim erfindungsgemäßen Verfahren wird somit erreicht, dass der Nachrichteninhalt innerhalb des geographischen Gebiets mittels Broadcast-Nachrichten verteilt wird. Zur Durchführung des Broadcast Verfahrens kann beispielsweise die gemäß 3GPP in Mobilfunknetzen spezifizierte PC5 Broadcast Kommunikation genutzt werden. Ein Mobilfunknetz (genauer gesagt dessen Basisstationen bzw. Antennenstandorte) wird jedoch erfindungsgemäß nicht unbedingt benötigt. Dadurch kann das erfindungsgemäße Verfahren auch außerhalb erdgebundener Positionen oder außerhalb der Reichweite von Mobilfunknetzen genutzt werden. Die V2V PC5 Spezifikation (vehicle-to-vehicle Kommunikation) ist bzw. wird für LTE bzw. 5G spezifiziert, um insbesondere zwischen Endgeräten mit Hilfe eines Sendemasts kommunizieren zu können; erfindungsgemäß wird hiervon jedoch lediglich die PC5-Sidelink Funktionalität für Endgerät zu Endgerät Kommunikation ohne Unterstützung eines Sendemasts genutzt. Die Endgerät-zu-Endgerät-Kommunikation ist im Kontext der vorliegenden Erfindung insbesondere die Kommunikation eines Senders S zu allen erreichbaren Empfängern E mit $E_2$, $E_3$, etc. Generalisiert ist es gemäß der vorliegenden Erfindung nicht zwingend erforderlich, eine exakte PC5 Spezifikation zu nutzen, sondern lediglich ein Broadcast Verfahren, mittels dessen Nachrichten von einem Sender S (bzw. $S_1$, positioniert an einer Position $Pos_1$) an alle Kommunikationsteilnehmer (Empfänger E mit $E_i$ aus $\{E_2, E_3, ..., E_n\}$ und später ggfs. genannt als korrespondierende Sender $S_i$ Element aus $\{S_2, S_3, ..., S_n\}$) in dessen Umkreis $R_1$ um $Pos_1$ gesendet werden können, ohne dass deren Kommunikationsadressen zwingend bekannt sein müssen. $S_1$ (d.h. der initiale Sender) fungiert sozusagen als beweglicher Funkmast, dessen Sendestärke den Radius $R_1$ im Wesentlichen festlegt. $R_1$ ist aber auch in bekannter Weise von den Umgebungsparametern und den Empfangseigenschaften der Empfänger abhängig. Häufig wird beim PC5-Sidelink aktuell einem Senderadius bzw. Funkabdeckungsradius von $R_1$ etwa von 400 Metern ausgegangen. Sender und Empfänger können in diesem Fall also nicht mehr als 400 Meter voneinander entfernt sein. Dieser eher willkürliche Wert von 400m folgt aus Tatsache, dass ein Endgerät in der allgemeinen Spezifikation mit Sendemast bei den aktuellen Zellgrößen auch immer einen Sendemast erreichen können muss. Die direkte V2V Kommunikation, hier die V2V Mobilfunkkommunikation über die PC5-Schnittstelle (Mode 4 ohne Nutzung des Mobilfunknetzes), ermöglicht die sehr schnelle Übertragung von Nachrichten, die für viele Anwendungsfälle, z.B. Gefahrenmeldungen, sehr wichtig ist (wie viel schneller als die übliche P2P Kommunikation in einem Mobilfunknetz, hängt von der Netzausprägung, z.B. 5G, und seiner Implementierung ab).

Gemäß der vorliegenden Erfindung ist es vorgesehen, dass die initiale Zusatzinformation wenigstens

-- eine Nachrichtenidentifikationsinformation,
-- eine Positionsinformation bezüglich des Senders,
-- eine Gebietsinformation zur Definition des geographischen Gebiets und
-- eine Gültigkeitszeitinformation

umfasst, wobei die Zusatzinformation darüber hinaus insbesondere wenigstens eine der nachfolgenden Informationen umfasst:

-- eine Zählerinformation,
-- eine Funkabdeckungsbereichsinformation, insbesondere eine Umkreisinformation, bezüglich des Senders,
-- eine Sendezeitpunktinformation,

wobei die Empfänger in einem ersten Teilschritt des zweiten Schritts anhand der empfangenen Gültigkeitszeitinformation prüfen, ob der Nachrichteninhalt der empfangenen Broadcast-Nachricht noch gültig ist undbeispielsweise anhand der Gebietsinformation und der Positionsinformation prüfen, welches Teilgebiet des geographischen Gebiets bereits abgedeckt ist,
wobei wenigstens ein Teil der Empfänger- in einem zweiten Teilschritt des zweiten Schritts und als weitere Sender agierend - jeweils weitere Broadcast-Nachrichten senden, sofern der Nachrichteninhalt der empfangenen Broadcast-Nachricht noch gültig ist und wenigstens ein noch nicht abgedecktes Teilgebiet des geographischen Gebiets aufgrund des Funkabdeckungsbereichs des betreffenden, als weiterer Sender agierenden, Empfängers erreichbar ist.

Hierdurch ist es erfindungsgemäß vorteilhaft möglich, dass mittels der initialen Broadcast-Nachricht durch das Mitübersenden der initialen Zusatzinformation auch weitere Informationen, wie die Nachrichtenidentifikationsinformation, die Positionsinformation bezüglich des Senders, die Gebietsinformation zur Definition des geographischen Gebiets und vor allem eine Gültigkeitszeitinformation, mitübertragen werden. Dabei ist vor allem die Gültigkeitszeitinformation erfindungsgemäß wesentlich, weil hierdurch der Zeitraum definiert wird, in welchem der Nachrichteninhalt zu übertragen ist. Damit ist es erfindungsgemäß in vorteilhafter Weise realisierbar, dass die für alle gemäß dem Verfahren gemäß der vorliegenden Erfindung ausgehend von einer Initialen Broadcast-Nachricht generierten Broadcast-Nachrichten gültigen Information (wie etwa die Gültigkeitszeitinformation, die Gebietsinformation zur Definition des geographischen Gebiets, etc.) in einfacher Weise übersandt werden.

Gemäß einer weiteren Ausführungsform der vorliegenden Erfindung ist es vorgesehen, dass die weiteren Zusatzinformationen der weiteren Broadcast-Nachrichten

-- die Nachrichtenidentifikationsinformation,
-- eine Positionsinformation bezüglich des als Sender agierenden Empfängers,
-- die Gebietsinformation und
-- die Gültigkeitszeitinformation

umfassen,
wobei die Zusatzinformation darüber hinaus insbesondere wenigstens eine der nachfolgenden Informationen umfasst:

-- eine weitere Zählerinformation,
-- eine Funkabdeckungsbereichsinformation, insbesondere eine Umkreisinformation, bezüglich des als Sender agierenden Empfängers,
-- eine Sendezeitpunktinformation.

Hierdurch ist es erfindungsgemäß in vorteilhafter Weise möglich, dass auch die weiteren Zusatzinformationen der weiteren Broadcast-Nachrichten in einfacher Weise übersandt werden. Insbesondere ist es erfindungsgemäß mittels der Nachrichtenidentifikationsinformation der weiteren Zusatzinformationen vorteilhaft möglich, dass insbesondere die Information mit übertragen wird, um die wievielte Generation (bzw. um die wievielte Wiederholung) der Übersendung des (ursprünglichen) Nachrichteninhalts es sich handelt.

Gemäß einer weiteren Ausführungsform der vorliegenden Erfindung ist es vorgesehen, dass während des zweiten Schritts der erste und zweite Teilschritt nacheinander mehrfach von unterschiedlichen Empfängern durchgeführt werden, bis das geographische Gebiet vollständig oder nahezu vollständig abgedeckt ist oder der Nachrichteninhalt der Broadcast-Nachricht nicht mehr gültig ist. Erfindungsgemäß wird ein Restgebiet betrachtet, wobei das Restgebiet dem durch die unterschiedlichen Empfänger detektierten oder bestimmten, noch nicht abgedeckten geographischen Gebiet entspricht.

Hierdurch ist es erfindungsgemäß insbesondere vorteilhaft möglich, dass mittels des Verfahrens dazu beigetragen wird, dass das Ziel der Abdeckung des geographischen Gebiets möglichst einfach erreicht wird.

Gemäß der vorliegenden Erfindung ist es vorgesehen, dass zur Verringerung der Anzahl an Broadcast-Nachrichten vor der Durchführung des zweiten Teilschritts geprüft wird, ob das Restgebiet durch eine erneute Aussendung der Broadcast-Nachricht verkleinert werden würde, wobei der betreffende Empfänger den zweiten Teilschritt erst durchführt, wenn dieses Prüfergebnis vorliegt,
wobei hierzu der betreffende Empfänger insbesondere die Prüfung, ob das Restgebiet durch eine erneute Aussendung der Broadcast-Nachricht verkleinert werden würde, wiederholt durchführt, insbesondere mit einer Wiederholrate von im Bereich von 0,1 bis 10 Hz, insbesondere von 1 Hz.

Hierdurch ist es gemäß solcher Ausführungsformen der Erfindung vorteilhaft möglich, dass mittels des Verfahrens dazu beigetragen wird, dass zum einen das Ziel der Abdeckung des geographischen Gebiets möglichst schnell oder vergleichsweise schnell erreicht wird, andererseits aber auch gewährleistet wird, dass die Anzahl an Broadcast-Nachrichten - zum einen die Anzahl der ‚Generationen' von Nachrichten (d.h. wie groß die maximale Anzahl n ist, wenn der Nachrichteninhalt vom n-1-ten Empfänger (welcher wiederum als Sender agiert) zum n-ten Empfänger übertragen wird) als auch die absolute Anzahl von Broadcast-Nachrichten (insbesondere in Bezug auf das Verhältnis des abzudeckenden geographischen Gebiets zum durchschnittlichen Funkabdeckungsgebiet (bzw. dessen durchschnittlichen Fläche) der jeweiligen Empfänger bzw. Sender) - möglichst gering ist.

Gemäß einer weiteren Ausführungsform der vorliegenden Erfindung ist es vorgesehen, dass der betreffende Empfänger eine Mehrzahl von Broadcast-Nachrichten empfängt sowie prüft, ob die Mehrzahl von empfangenen Broadcast-Nachrichten eine identische Nachrichtenidentifikationsinformation aufweisen, wobei für den Fall einer positiven

Prüfung die entsprechende Broadcast-Nachricht vereinigt oder fusioniert werden.

Hierdurch ist es gemäß solcher Ausführungsformen der Erfindung ebenfalls vorteilhaft möglich, dass zum einen das Ziel der Abdeckung des geographischen Gebiets möglichst schnell erreicht wird und andererseits die Anzahl der Broadcast-Nachrichten möglichst reduziert wird.

Gemäß einer weiteren Ausführungsform der vorliegenden Erfindung ist es vorgesehen, dass die Gebietsinformation zur Definition des geographischen Gebiets eine Polygonkette, umfassend eine Mehrzahl an Punkten, die einen polygonalen geographischen Bereich definieren, ist oder umfasst oder eine Mehrzahl an Polygonketten ist oder umfasst, wobei insbesondere eine Polygonkette oder ein damit definiertes Polygon zusätzlich einen Höhenbereich definiert und somit einen geographischen Volumenbereich definiert.

Hierdurch ist es gemäß solcher Ausführungsformen der Erfindung vorteilhaft möglich, das geographische Gebiet flexibel und an den jeweiligen Anwendungsfall adaptiert zu definieren.

Gemäß einer weiteren Ausführungsform der vorliegenden Erfindung ist es vorgesehen, dass die initiale Zusatzinformation eine Mehrzahl an Gebietsinformationen und/oder eine Mehrzahl unterschiedlicher Gültigkeitszeitinformationen umfasst, wobei insbesondere jeder der Gebietsinformationen eine Gültigkeitszeitinformation zugeordnet ist.

Des Weiteren wird die Aufgabe gelöst durch ein System gemäß Anspruch 10.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Die Aufgabe wird ferner gelöst durch eine Kommunikationseinrichtung gemäß Anspruch 11.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer Kommunikationseinrichtung ausgeführt wird.

Des Weiteren wird die Aufgabe gelöst durch ein computerlesbares Medium gemäß Anspruch 13 und ein Datenträgersignal gemäß Anspruch 14.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

Kurze Beschreibung der Zeichnungen

**Figur 1** zeigt eine schematische Situation zur Veranschaulichung des Beginns des erfindungsgemäßen Verfahrens.

**Figuren 2 und 3** zeigen schematisch weitere Situationen zur Veranschaulichung des erfindungsgemäßen Verfahrens.

Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

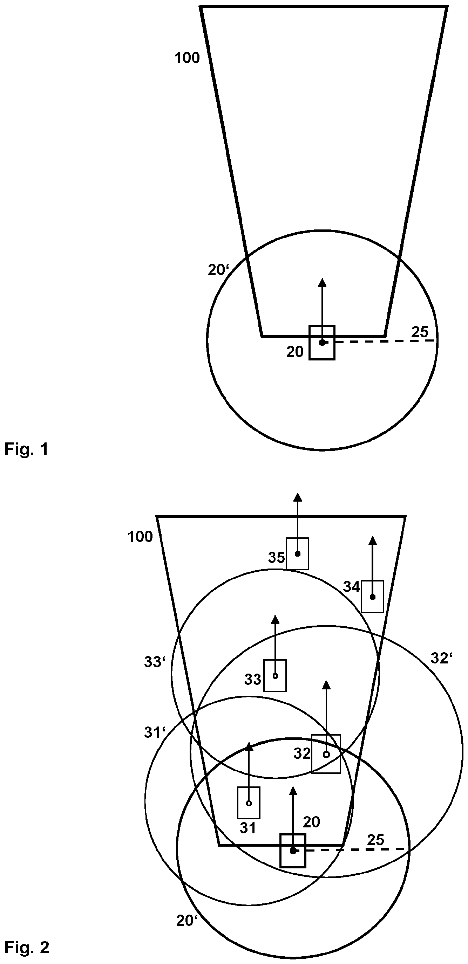

In Figur 1 ist schematisch eine Situation zur Veranschaulichung des Beginns des erfindungsgemäßen Verfahrens dargestellt. Es ist von einem Sender 20 die Übermittlung eines Nachrichteninhalts an entsprechende Empfänger (in Figur 1 nicht dargestellt) innerhalb eines geographischen Gebiets 100 vorgesehen bzw. gewünscht. Hierzu überträgt der Sender 20 wenigstens eine initiale Broadcast-Nachricht, wobei der Nachrichteninhalt von dem Sender 20 an eine Mehrzahl von Empfängern 31, 32, 33 als Broadcast-Nachricht gesendet wird.

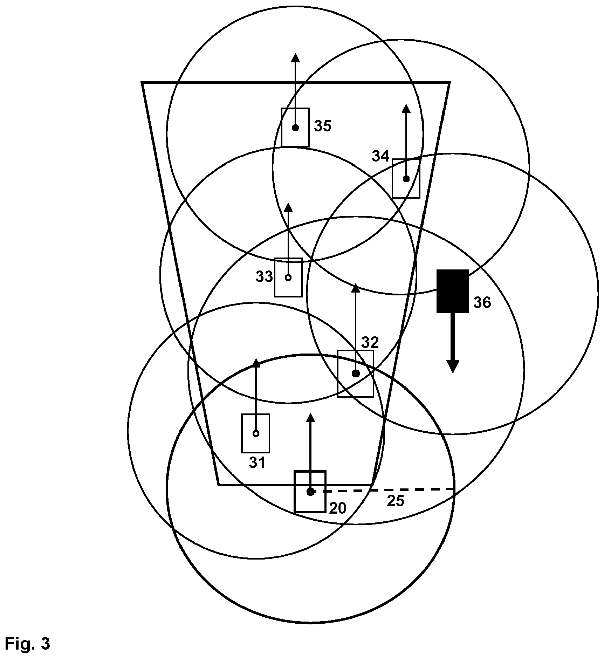

Dies ist in Figur 2 und 3 dargestellt, welche schematisch weitere Situationen zur Veranschaulichung des erfindungsgemäßen Verfahrens zeigen.

Wie in Figur 1 dargestellt, weist der Sender 20 ein Funkabdeckungsgebiet 20' auf, innerhalb welchem ein Empfang von gesendeten Broadcast-Nachrichten möglich ist, sofern sich zum Sendezeitpunkt in diesem Gebiet bzw. Funkabdeckungsgebiet 20' Empfänger befinden. Im Beispiel gemäß Figur 2 befinden sich innerhalb des Funkabdeckungsgebiets 20' des Senders 20 die Empfänger 31, 32. Diese erhalten somit den Nachrichteninhalt mittels der initialen Broadcast-Nachricht des Senders 20.

Die initiale Broadcast-Nachricht wird erfindungsgemäß mittels einer D2D-Funktionalität, device-to-device-Funktionalität oder einer PC5-Sidelink Funktionalität, insbesondere unter Nutzung der Mode-4-Funktionalität, gesendet.

Zur Abdeckung des geographischen Gebiets 100 (d.h. zur Ermöglichung des Empfangs des Nachrichteninhalts durch Empfänger innerhalb des gesamten geographischen Gebiets 100) ist nun erfindungsgemäß vorgesehen, dass in einem ersten Schritt der Sender 20 die initiale Broadcast-Nachricht umfassend den Nachrichteninhalt und eine initiale Zusatzinformation sendet und wenigstens ein erster Empfänger 31 die initiale Broadcast-Nachricht empfängt (aber bevorzugt mehrere Empfänger die initiale Broadcast-Nachricht empfangen). In einem nachfolgenden zweiten Schritt sendet der wenigstens eine Empfänger 31 bzw. senden die Empfänger 31 und 32 - als weitere Sender (im Beispiel der Figur 2 sind dies die beiden Empfänger 31 und 32) - jeweils weitere Broadcast-Nachrichten, wobei die weiteren Broadcast-Nachrichten den Nachrichteninhalt und jeweils weitere Zusatzinformationen zur Abdeckung des geographischen Gebiet 100 umfassen.

Die konzipierte Methodik ermöglicht somit eine gebietsspezifisch gezielte dezentrale Verbreitung von Informationen in geographische Gebiete hinein durch ausgewählte Kommunikationseinrichtungen. Hierbei wird unter ausgewählten Kommunikationseinrichtungen solche Kommunikationseinrichtungen verstanden, die zum einen erreichbar sind und zum anderen zur Lösung (d.h. zur Abdeckung des geographischen Gebiets) einen Beitrag zu liefern in der Lage sind, insbesondere statische (d.h. ortsfeste) oder aber kinematische (d.h. nicht ortsfeste) Kommunikationseinrichtungen. Die Kommunikation erfolgt über Broadcast bzw. Broadcast-Nachrichten.

Erfindungsgemäß ist es vorgesehen, dass die initiale Zusatzinformation wenigstens

-- eine Nachrichtenidentifikationsinformation,
-- eine Positionsinformation bezüglich des Senders 20,
-- eine Gebietsinformation zur Definition des geographischen Gebiets 100 und
-- eine Gültigkeitszeitinformation

umfasst, wobei die Zusatzinformation darüber hinaus insbesondere wenigstens eine der nachfolgenden Informationen umfasst:

-- eine Zählerinformation,
-- eine Funkabdeckungsbereichsinformation, insbesondere eine Umkreisinformation, bezüglich des Senders 20,
-- eine Sendezeitpunktinformation,

wobei die Empfänger 31, 32 in einem ersten Teilschritt des zweiten Schritts anhand der empfangenen Gültigkeitszeitinformation prüfen, ob der Nachrichteninhalt der empfangenen Broadcast-Nachricht noch gültig ist und beispielsweise anhand der Gebietsinformation und der Positionsinformation prüfen, welches Teilgebiet des geographischen Gebiets 100 bereits abgedeckt ist,
wobei wenigstens ein Teil der Empfänger 31, 32 - in einem zweiten Teilschritt des zweiten Schritts und als weitere Sender agierend - jeweils weitere Broadcast-Nachrichten senden, sofern der Nachrichteninhalt der empfangenen Broadcast-Nachricht noch gültig ist und wenigstens ein noch nicht abgedecktes Teilgebiet des geographischen Gebiets 100 aufgrund des Funkabdeckungsbereichs des betreffenden, als weiterer Sender agierenden, Empfängers erreichbar ist.

Die weiteren Zusatzinformationen der weiteren Broadcast-Nachrichten umfassen bevorzugt:

-- die Nachrichtenidentifikationsinformation,
-- eine Positionsinformation bezüglich des als Sender agierenden Empfängers 31, 32,
-- die Gebietsinformation und
-- die Gültigkeitszeitinformation,

wobei die Zusatzinformation darüber hinaus insbesondere wenigstens eine der nachfolgenden Informationen umfasst:

-- eine weitere Zählerinformation,

-- eine Funkabdeckungsbereichsinformation, insbesondere eine Umkreisinformation, bezüglich des als Sender agierenden Empfängers 31, 32,
-- eine Sendezeitpunktinformation.

Insbesondere ist es erfindungsgemäß bevorzugt vorgesehen, dass während des zweiten Schritts der erste und zweite Teilschritt nacheinander mehrfach von unterschiedlichen Empfängern 31, 32, 33 durchgeführt werden, bis das geographische Gebiet 100 vollständig oder nahezu vollständig abgedeckt ist oder der Nachrichteninhalt der Broadcast-Nachricht nicht mehr gültig ist.

Dies ist in den Figuren 2 und 3 ausgehend von einer lediglich teilweisen Abdeckung des geographischen Gebiets 100 gemäß der Figur 1 sukzessive dargestellt: Es werden ausgehend vom Funkabdeckungsgebiet 20' des initialen Senders 20 immer größere Teile des geographischen Gebiets 100 abgedeckt bzw. (mittels entsprechender Funksignale) erreicht. Dabei ist es vorgesehen, dass ein Restgebiet (des geographischen Gebiets 100) betrachtet wird, wobei das Restgebiet dem durch die unterschiedlichen Empfänger 31, 32, 33 detektierten oder bestimmten, noch nicht abgedeckten geographischen Gebiet 100 entspricht.

Erfindungsgemäß ist es vorgesehen, dass zur Verringerung der Anzahl an Broadcast-Nachrichten vor der Durchführung des zweiten Teilschritts geprüft wird, obdas Restgebiet durch eine erneute Aussendung der Broadcast-Nachricht verkleinert werden würde, wobei der betreffende Empfänger 31, 32, 33 den zweiten Teilschritt erst durchführt, wenn dieses Prüfergebnis vorliegt. Hierzu ist insbesondere vorgesehen, dass der betreffende Empfänger 31, 32, 33 insbesondere die Prüfung, ob das Restgebiet durch eine erneute Aussendung der Broadcast-Nachricht verkleinert werden würde, wiederholt durchführt, insbesondere mit einer Wiederholrate von im Bereich von 0,1 bis 10 Hz, insbesondere von 1 Hz. Insgesamt ist es erfindungsgemäß bevorzugt auch vorgesehen, dass der jeweilige betreffende Empfänger 31, 32, 33 eine Mehrzahl von Broadcast-Nachrichten empfängt sowie ferner auch prüft, ob die Mehrzahl von empfangenen Broadcast-Nachrichten eine identische Nachrichtenidentifikationsinformation aufweisen, wobei für den Fall einer positiven Prüfung die entsprechenden Broadcast-Nachricht vereinigt oder fusioniert werden.

Ein beispielhafter Ablauf der Weiterleitung ist in den Figuren schematisch dargestellt: Der Sender 20 - nachfolgend auch als S1 bezeichnet - erreicht mit der Nachricht (initiale Broadcast-Nachricht) die Empfänger 31, 32 - welche nachfolgend auch als E2 bzw. E3 bezeichnet werden. Nur der Empfänger E3 (bzw. Empfänger 32) erreicht (dann als Sender agierend) auch den Empfänger E4 (bzw. Empfänger 33). Nur mittels des Empfängers Ex (Empfänger 36) außerhalb des geographischen Gebiets 100 - nachfolgend auch als Gebiet PK bezeichnet - (welcher Empfänger sich sogar im Gegenverkehr befindet) kann auch Empfänger E5 (bzw. Empfänger 34) erreicht werden. Empfänger E5 (Empfänger 34) kann (als Sender agierend) Empfänger E6 (Empfänger 35) erreichen. Damit verbleibt von PK nur ein kleines Gebiet von PK, dass nicht mit der Nachricht (beispielsweise "Rettungsgasse freimachen") versorgt ist - das Gebiet oben links in PK (bzw. im geographischen Gebiet 100). Erfindungsgemäß ist es hierbei insbesondere vorgesehen, dass die Sender und Empfänger (beispielsweise als Fahrzeuge) beweglich sind.

Nachfolgend wird ein Anwendungsfall beschrieben, welcher vom Vorhandensein eines Mobilfunknetzes unabhängig ist. Ein Rettungsfahrzeug, welches beispielsweise als Sender S1 (bzw. Sender 20) sich auf einer Straße (etwa einer Autobahn) befindet, sendet mit der initialen Broadcast-Nachricht (nachfolgend auch als Nachricht N1 bezeichnet) einen Polygonzug zur Markierung des 2-dimensionalen Gebietes 100, welches den Bereich auf der Autobahn beinhaltet, auf dem eine Rettungsgasse gebildet werden soll. Dieser Gebietsbereich kann bei Fahrtfortschritt des Rettungsfahrzeuges (Sender 20) auf mittels einer Nachricht N** aufdatiert werden. Bei nicht ausreichender Reichweite des Senderadius R1 (vgl. Bezugszeichen 25 in den Figuren) (etwa wegen eines Tunnels, einer Abschattung etc.) können die Empfänger Ei der Nachricht diese Nachricht weiterleiten.
Ein weiteres Beispiel ist etwa die initiale Bekanntmachung und Verbreitung eines durch Waldbrand gefährdeten Gebietes, des weiteren auch Stauwarnungen, Evakuierungen, Sturmwarnungen, etc.
Ferner ist es erfindungsgemäß ebenfalls möglich und bevorzugt, dreidimensionale Gebiete als geographisches Gebiet 100 zu definieren und beispielsweise die Versorgung eines Hochhauses, z.B. nur für das 40. bis 60. Stockwerk eines speziellen Hochhauses (definiert durch seine 2D Lage) initiiert durch die Nachricht N1 des Senders S1 - etwa initiiert aus der Hausmeister Parterre Wohnung zu adressieren.

Erfindungsgemäß ermöglicht das Verfahren somit eine gebietsspezifisch gezielte dezentrale Verbreitung von Informationen in geographische Gebiete hinein durch Kommunikationseinrichtungen. S1 kann also eine Nachricht N1 (d.h. die initiale Broadcast-Nachricht) als Broadcast Nachricht versenden und alle weiteren $S_i$ (d.h. alle weiteren Empfänger 31, 32, 33, etc., welche auch als Sender fungieren können) können diese Nachricht identisch oder angereichert als Broadcast Nachricht weiterleiten. Die $E_i$ und $S_i$ können ihre Position und die aktuelle Zeit bestimmen und beziehen sich dabei auf einheitliche Koordinaten- und Zeitsysteme. Die $E_i$ und $S_i$ können Berechnungen durchführen und besitzen einen lokalen Speicher. Es ist erfindungsgemäß möglich, dass einige der Empfänger ($E_i$) in der Ausprägung "nur empfangend/anzeigend" aber nicht weiterleitungsfähig (d.h. als Sender fungierend) vorliegen bzw. realisiert sind; hierauf wird nachfolgend jedoch nicht weiter eingegangen, sondern davon ausgegangen, dass eine Kommunikationseinrichtung sowohl als Empfänger als auch als Sender zu arbeiten in der Lage ist.

Die initiale Nachricht (nachfolgend auch als N1 bezeichnet) von S1 wird den Content, d.h. den Nachrichteninhalt - nachfolgend auch als C1 bezeichnet, etwa "Rettungsgasse freimachen" -, enthalten und noch weitere Informationen (nachfolgend auch als Inf1 bezeichnet), die angeben ob der Content C1 für einen der Empfänger gilt und/oder ob er ihn auch mittels dem gleichen Broadcast Verfahren weiterleiten und dabei auch anreichern soll. Wenn der Empfänger $E_i$ an Hand Inf1 entscheidet, dass er die Nachricht N1 weiterverbreiten soll, so wird $E_i$ die weiteren Informationen Inf1 vorher zu $Inf_i$ aufdatieren. Die weiteren initialen Inf1 Informationen enthalten erfindungsgemäß insbesondere die Parameter:

-- ID, eindeutige Nachrichten-ID z.B. [MSISDN]+[Zähler], wobei der Zähler in S1 verwaltet wird;
-- Pos1, die Position von S1 zum Zeitpunkt t1;
-- R1, der Umkreis von Pos1, in dem die Nachricht verbreitet werden soll, definiert von S1;
-- t1=Zeitpunkt der Pos1 Bestimmung von S1 (Bedingung: ausreichend identisch mit Sendezeitpunkt t1+dt);
-- $t_g$=Gültigkeitszeitpunkt solange der Content C1 gültig sein soll;
-- die Definition des geographischen Gebiets 100, insbesondere in Form einer Pk (=Polygonkette), bestehend aus (bzw. umfassend) Punkten mit 2-D oder 3-D Koordinaten, die ein Gebiet PK eindeutig beschreiben (z.B. $Pos_a$, $Pos_b$, ..., $Pos_k$, wobei das Gebiet durch Verbindung der Positionen eindeutig beschrieben wird, da $Pos_k$ wieder mit $Pos_a$ verbunden werden soll). Bei mehreren Polygonketten (dann mittels $Pk_1$, $Pk_2$, ... indiziert), wobei die Anzahl der Ketten genannt sein muss und auch zusätzlich genannt sein muss, ob innerhalb einer Kette Pk sich ein Gebiet PK befindet, das mit einer Nachricht N und dessen Content C versorgt werden soll oder ob dieses Gebiet ausgeschlossen werden soll. Letzteres könnte z.B. die Definition eines Ringes sein, der zu versorgen ist. Der Ring wird dann durch 2 Polygone und 2 Polygonflächen beschrieben. Das äußere Polygon ist das initiale Versorgungsgebiet, von welchem das Gebiet der inneren Polygonfläche abzuziehen ist wodurch die Ringfläche eindeutig beschrieben ist. (Beispiel: Autobahnring um eine Großstadt als Versorgungsgebiet für Nachrichten.) Die Polygone können per Flag auch alternativ durch Kreisparameter oder andere geometrische Beschreibungen definiert sein. Anstatt der Polygone könnten auch nur Routenbezeichnungen eines Straßensystems definiert sein, woraus ein Empfänger dann die zugehörigen Straßenkorridore als eindeutige geographische Gebiete ableiten kann. Anmerkung: Im weiteren Erläuterungstext werden der Einfachheit halber aber nur Polygonketten genannt.

Diese Inf1 Informationen werden von einem $E_i$ insbesondere bewertet auf Weiterleitung und Anreicherung wie nachfolgend beschrieben:
Ein $E_i$, das eine N1 Nachricht (Nachricht von S1) empfängt, prüft welches Teilgebiet des Polygongebietes PK durch den Sender S1 bereits erreicht worden ist und korrigiert in seinem Prozessor das von ihm potenziell noch per Broadcast zu versorgende Restgebiet zu PKR=PK1=PK-P1. P1 kann von $E_i$ algebraisch mit den bekannten Formeln berechnet werden: P1 ist die Schnittfläche T1 von PK mit der Kreisfläche K1 definiert durch Pos1 (des Senders S1) und R1, also P1=T1. Danach prüft $E_i$, ob eine Kreisfläche $K_i$ um seine Position $Pos_i$ mit $R=R_i$ eine Schnittfläche $T_i$ mit PK1 hat, was algebraisch wieder in bekannter Weise realisierbar ist. Sofern die Schnittfläche $T_i$ größer Null ist, also $T_i>0$, und zugleich $t_g$ nicht abgelaufen ist, wird $E_i$ die Nachricht N1 weiterverbreiten wollen, damit spätere Empfänger das verbliebene Restgebiet PKR=PK1-$T_i$=PK-P1-$T_i$ potenziell mit Nachrichten versorgen können, sofern ihre Position und Radius dazu geeignet sind.
Würden mehrere E nacheinander einen Beitrag zur Verkleinerung des Restgebietes PKR beitragen, so werden zur Berechnung des aktuellen PKR dann mehre $T_i$ nacheinander berücksichtigt, z.B. PKR=PK-P1-T2-T3-T4.
Ein aktuell gültiges Restgebiet PKR ist also immer durch PK, also mindestens eine Polygonkette Pk, und durch die zeitlich nachfolgenden Kreisflächen $K_i$, also durch $Pos_i$ und $R_i$, eindeutig beschrieben werden. Diese eindeutige Beschreibung für das aktuelle Restgebiet PKR muss also allen nachfolgenden Empfängern $E_i$ immer aktualisiert vorliegen. Dieses ist dadurch gewährleistet, dass bei der Weiterleitung einer Nachricht diese erhaltene Nachricht im Empfänger um seine Kreisflächeninformation $K_i$ ($Pos_i$, $R_i$) angereichert werden muss und dann erst diese angereicherte Nachricht weitergeleitet wird. Hierzu genügt es, wenn zur bisherigen Nachricht N folgende Daten zu N hinzugefügt werden:

-- $Pos_i$, die Position von $S_i$ zum Zeitpunkt $t_i$
-- Ri von Si
-- $t_i$

Damit kann die Anreicherung wie folgt erfolgen:

$$N_i=N(i-1)+\text{Anreicherung} = N(i-1)+[Pos_i,R_i,t_i],$$

d.h. also z.B.: N2=N1+Anreicherung = N1+[Pos2,R2,t2]
Es könnten natürlich zwei Empfänger mit unterschiedlichen Positionen Pos2a und Pos2b diese Anreicherung und Versendung von N2 zeitgleich vornehmen, dann würden zeitgleich zwei Nachrichten N2a und N2b versendet werden, die aber bzgl. der Anreicherung unterschiedlich wären.

Ein späterer Empfänger $E_j$ würde dann die Nachricht $N_i$ bewerten und ggf. zusätzlich anreichern zu:

$$N_j = N_i + \text{Anreicherung} = N_i + [Pos_j, R_j, t_j]$$

Dieses würde solange wiederholt durch spätere Empfänger geschehen bis ein Empfänger $E_k$ detektiert, dass $t_g$ überschritten ist oder das Gebiet PK bereits komplett abgedeckt wurde, also das aktuelle Restgebiet PKR flächenmäßig zu Null wird.

Dass ein geographisches Gebiet 100 komplett abgedeckt ist, bezieht sich aber darauf, dass es durch Nachrichten innerhalb des Zeitraums t1 bis zur letzten N Aktualisierung zum Zeitpunkt $t_n$ abgedeckt ist. Daraus resultiert aber, dass sich aktuell trotzdem ein Empfänger im Gebiet PK befinden kann, der noch keine Broadcast Nachricht mit der ID von N1 erhalten hat, was daran liegt, dass dieser Empfänger ein kinematischer ist und nachträglich in ein bereits versorgtes Teilgebiet von PK sich hineinbewegt hat. Dieses Problem kann unter Vermeidung von zu vielen Broadcast Nachrichten dadurch gelöst werden, dass S1 den Content C1 zu einem späteren Zeitpunkt mit einer neuen ID nochmals versendet, wobei S1 dann aber auch noch zusätzlich das Gebiet weiter spezialisieren kann, z.B. auf die Einfahrtbereiche des initialen PK Gebietes womit alle Neuankömmlinge informiert würden.

Einer dieser oben beschriebene Empfänger, der die Nachricht angereichert weitergeleitet hat, kann aber zu späteren Zeitpunkten wieder Nachrichten mit der gleichen ID erhalten, die er dann wiederum nach der gleichen Logik anreichern und/oder weiterleiten muss. Ein offensichtlicher Grund dafür liegt in der Kinematik (d.h. der möglichen Bewegung) der Empfänger.

Weitere Gründe sind Änderungen in N1, die durch S1 nachträglich verursacht sind und auch nachträglich mit weiterhin der identischen Nachrichten ID versendet werden, wobei diese Änderungen im Wesentlichen die Position Pos1 und das Gebiet PK betreffen. S1 kann also auch beweglich sein und kann das Gebiet PK relativ zu seiner aktuellen Position, Bewegungsrichtung oder z.B. Position auf einer Straße ändern. Beispiel: Ein sich bewegendes Rettungsfahrzeug, dass eine sich dann auch bewegende Rettungsgasse benötigt. Selbst wenn S1 statisch wäre, könnte S1 später Zusatzinformationen erhalten, die S1 bewirken das Gebiet PK neu zu definieren oder $t_g$ zu verändern.

Manches des oben beschriebenen kann zu einem nicht unerheblichen Kommunikationsaufkommen mit Broadcast Nachrichten führen, wenn man nicht die unnötigen Nachrichten vorab erkennt und zu senden unterdrückt, was erfindungsgemäß insbesondere realisiert wird.

Als zusätzliche Verfeinerung könnte weiterhin von jedem $E_n$ geprüft werden, ob es trotz bereits abgedecktem PK durch die vorherigen Broadcast Nachrichten trotzdem eine sogenannte Refresh-Nachricht für PK als Broadcast Nachricht senden soll. Dieses sollte dann geschehen, wenn ein Zeitpunkt t in einer Nachricht, z.B. $t=t_u$, mit seinen Daten $(Pos_u, R_u, t_u)$ einen Beitrag $T_u$ zu der bisherigen Abdeckung von PK bewirkt hat, aber dieser T, Beitrag bereits zu weit in der Vergangenheit liegt, also ob $t_x - t_u$ einen zu großen Wert liefert, z.B. größer als $t_R$ ist.

$$t_R = \text{Zeitdifferenz für Refresh-Nachricht für PK}$$

Bei dieser zusätzlichen Verfeinerung wird somit $t_R$ zusätzlich durch S1 in seiner Nachricht N1 vorgegeben.

Auch die Refresh-Nachricht wird in ihrer Erzeugung exakt identisch, s.o., wie eine der bisherigen Broadcast Nachrichten nach der N1 behandelt.

Ist S1 beweglich und/oder will S1 seine N1 verändern bzgl. des relevanten Gebietes (Beispiel für beide Fälle: Rettungsgassen Anforderung) oder will S1 insb. die weitere Verbreitung seiner N1 stoppen (Beispiel: Helikopter meldet S1, dass der Stau komplett aufgelöst ist.), so ist hierfür die gleiche ID wie bei N1 zu nutzen.

Initial setzt S1 die ID auf eine eindeutige ID, z.B. MSISDN+Zeitstempel $t_1$, und speichert wie vorher auch die N1 für sich in seinem lokalen Speicher ab.

Alle teilnehmenden Sender müssen die zuletzt erhaltenen N, die eine noch nicht abgelaufene Relevanz $t_g$ besitzen, für alle IDs lokal abgespeichert verfügbar haben und werden diese bei $t_g$ Überschreitung löschen können.

Soll N1 nicht mehr gültig sein, so sendet S1 ein N1*= N1 aber $t_g <= t_1$ oder auch $t_g$=aktuelle Zeit. Hierzu gibt es dann zwei mögliche alternative Abläufe, die durch einen zusätzlichen Parameter gesteuert werden können, der z. B. in der ID versteckt werden könnte, als a) ID behält das positive Vorzeichen oder b) ID erhält ein negatives Vorzeichen: Alternative 1 mit positivem ID Vorzeichen: Diese N1* dann empfangende Empfänger E werden diese Nachricht und auch vorher empfangene Nachrichten N1 oder angereicherte N1 Nachrichten nicht mehr weiter anreichern und/oder verbreiten und setzen diese ID für sich auf eine Blacklist.

Alternative 2 mit negativem ID Vorzeichen: Diese N1* dann empfangende Empfänger E werden diese Nachricht mit insbesondere geeignet geändertem C1, z.B. "Gemeldeter Stau xyz ist aufgelöst." als eine initiale N1 mit ID Bezug zu früherer initialer N1 versenden. Der Gültigkeitszeitpunkt $t_g$* wird dann sinnvoller Weise i.d.R. größer oder gleich als das initiale $t_g$ sein.

Will S1, dass seine N1 mit C1 in Zukunft in abgeänderter Form weiterhin gültig sein soll, z.B. das Gebiet PK oder den Gültigkeitszeitpunkt tg verändern zu PK* oder tg* (oder auch tR oder R1), so sendet S1 eine Nachricht N1** mit den im ersten Block der S1 Nachricht geänderten Parametern

-- C1, i.d.R. wie in N1, kann aber auch abgeschwächt sein, Z.B. anstatt "Stau bei xyz mit Stillstand." zu "Zähflüssiger Verkehr bei xyz."
-- ID, wie in N1
-- Pos1n, die Position von S1 zum Zeitpunkt t1n
- R1n, definiert von S1
-- t1n=Zeitpunkt der Pos1n Bestimmung von S1 (Bedingung: ausreichend identisch mit Sendezeitpunkt t1n+dt)
-- tgn=Gültigkeitszeitpunkt solange der Content C1 gültig sein soll
-- tRn= Zeitdifferenz für Refresh-Nachricht für PK
-- Pkn Polygonkette aus Punkten mit Koordinaten bestehend, die ein geschlossenen Gebiet PKn beschreiben (z.B. Posa, posb, ..., Posk wobei das Gebiet durch Verbindung der Positionen eindeutig beschrieben wird, da Posk wieder mit Posa verbunden werden soll.), weitere Erläuterung s. oben.

und N1** wird dann entweder als "korrigierte" N1 gesendet oder aber falls S1 nach dem Versenden von N1 von anderen Sendern S später noch Nachrichten N2, N3, ... zur gleichen ID empfangen hat, so wird nur die zeitlich letzte dieser Ni von S1 "korrigiert" bzgl. des ersten Blockes versendet. Natürlich wird vorher die ID auf Identität geprüft. Also gelten 2 Fälle für S1 zum Zeitpunkt t=tn>t1:

N1**= [N1] aber um ersten Block S1 korrigiert mit S1 Block zu tn;
[N1] also ohne S2, S3, ... Restgebiet Verkleinerungen
oder
N1**= [Ni] aber um ersten Block S1 korrigiert mit S1 Block zu tn;
[Ni] also i.d.R. bereits mit Restgebiet Abdeckungen durch vorherige S2, S3, ... ... usw... kann zu einem späteren Zeitpunkt S1 oder jedes E diese N1** bei Bedarf weiter anreichern und als Broadcast weiterversenden.

Die zertifizierte Software in den Mobilfunkeinheiten ist so programmiert, dass nur ein S1 das Update zu N* und/oder N** bzgl. des ersten Blocks, also die Parameter der N1 Nachricht, senden kann. Alle anderen Empfänger E dürfen nur ihre speziellen Blöcke anhängen. Die zertifizierte Software kann auch nur speziellen Sendern die initiale S1 Nachricht N1 erlauben wobei diese speziellen Sender auch temporär von einer Zentrale dazu autorisiert werden könnten.

Ein Empfänger kann natürlich mehrmals eine Anreicherung senden sofern er ein neues bisher nicht abgedecktes Gebiet bedienen kann oder sein bisher abgedecktes Gebiet bisher eine von ihm ausreichend veraltete Anreicherung erhalten hatte.

Nachfolgend wird ein Mechanismus/Algorithmus zur Minimierung der Anzahl an Nachrichten beschrieben, d.h. mittels dessen die Anzahl an Broadcast Nachrichten, die zu einer ID gehören, wesentlich reduziert werden können, ohne dass davon die Verbreitungsgeschwindigkeit der Komplettversorgung des PK Gebietes signifikant belastet wird (sprich: die Komplettversorgung des PK zu sehr zu verzögern). Es wird unter den gegebenen Voraussetzungen von kinematischen Sendern eine Minimierung der Gesamtanzahl an Nachrichten bis zur Komplettversorgung des PK Gebietes einer N erzielt.

Die Lösung beruht auf dem Grundgedanken wie lange eine Nachrichtenweiterleitung (mit oder ohne Anreicherung) hinausgezögert werden kann, ohne dass die PK Gebiet Gesamtversorgung sich dadurch signifikant verzögert. Hierzu kann man die aktuelle Kinematik und Prognose der Kinematik (kurzfristige Routenplanung) der E und S und ihre Relation zu dem jeweils verbleibenden Restgebiet nutzen. Hierzu kann aber auch ohne die Kinematik der E und S zu kennen auch insbesondere mit fortschreitender realer Zeit (oder auch simuliertem Zeitfortschritt) geprüft werden, ob und wie stark sich eine Restgebietsverkleinerung durch eine Nachricht des Senders S(Posm, tm, Rm, ...) in Abhängigkeit der Variation im Zeitpunkt tm auswirken wird. Interessant ist hierbei die Berücksichtigung ab welchem tm die Restgebiete Verkleinerung durch die Nachricht von S sich verringern würde (also der Nutzen kleiner wird) oder aktuell bereits hat. Bei einer signifikanten Verringerung sollte eine Nachricht mit aktuellen Werten (Pos,R,t) gesendet werden, sofern diese vorher eine Zeitlang für das vorherigen Werte-Tripel hinausgezögert wurde.

Erfindungsgemäß ist es ferner auch möglich, den Mechanismus nach Weiterleitung der Nachricht auch zu differenzieren nach:

a) mit Anreicherung der Nachricht oder
b) ohne Anreicherung.

Bisher wurde implizit immer der Fall behandelt, dass mit der potentiellen Anreicherung durch $Pos_m$ und $R_m$ das Restgebiet verkleinert werden soll. Man kann aber in wenigen Fällen theoretisch auch einen geringen positiven Nebeneffekt des Nachrichtweiterleitens ohne Anreicherung haben, sofern diese Nachricht dann von einem E empfangen würde, welcher dann durch seine angereicherte Nachricht einen positiven Restgebiete-Verkleinerungsbeitrag liefern würde. Dieses könnte durch Setup Parameter in den E gezielt genutzt oder unterdrückt werden oder sogar von S1 in seiner N1 mit Zwang und Schwellwerten vorgegeben werden. Allerdings ist es möglich, dass sich dadurch die Anzahl der Broadcast Nachrichten z.T. erheblich erhöht. Im Weiteren wird lediglich der Fall a) betrachtet, d.h. die Weiterleitung der Nachricht mit Anreicherung der Nachricht.

Der Algorithmus (mit Anreicherung) sieht dann grob erläutert für E und S1 aber notwendigerweise differenziert wie folgt aus:

Für einen Empfänger E gilt:

Empfänger E sendet ein N, wenn er das Restgebiet verkleinern wird und zugleich merkt, dass diese Verkleinerung zum ersten Mal geringer würde, vorher sendet er N nicht. Dazu muss jedes E aber eine Frequenz für Prüfungen haben, z.B. 1 Hz, die es aber auch aus den Daten der zuletzt empfangenen N ableiten könnte. Dadurch vermeidet man zu viele Broadcast Nachrichten N. Zusätzlich könnte E auch einen Schwellwert nutzen, um die Verringerung der Verkleinerung über z.B. Flächendelta=9m*m zu fordern. Das vorzugebende Flächendelta ist eine Funktion der Positioniergenauigkeit, des Restflächenpolygons Pk (der Polygone Pk1, Pk2, ...) und seiner aktuellen Route für die nächsten x Sekunden und kann von der Software in E dynamisch berechnet werden.

Für einen ehemals initialen S1 Sender gilt:

Für S1 gilt eine ähnliche Wiederholungsrate, aber S1 sollte etwas öfter senden als ein E, sofern die neue Rettungsgassenfläche sich bei kinematischen S1 auch kinematisch ändert, muss S1 prüfen, wann die Änderung von Pk signifikant ist, was von der Geschwindigkeit von S1 abhängig ist. Also S1 sendet auch dann, wenn die kinematische Fläche in Quadratmetern sich um weniger Zuwachsdelta ändert ob größer oder kleiner, denn S1 wird auch prüfen ob die Geographische Lage sich signifikant ändert, was aus der geographischen Schnittfläche bisherige zu neuer Fläche in bekannter Weise eindeutig berechnet werden kann. (Eine größere neue Fläche als die alte Fläche in m*m und eine Schnittfläche beider Flächen kleiner als die neuere Fläche sind hierbei sensitiver zu behandeln als eine kleinere neue Fläche als die alte Fläche in m*m und eine Schnittfläche beider Flächen kleiner als die alte Fläche.) Aber dadurch müssen selbst nah liegende E dann z.T. auch wieder Refresh Nachrichten auf Anreicherung/Weiterleitung prüfen müssen. Das werden die nahliegenden E zwar prüfen, aber i.d.R. zu dem Ergebnis kommen die Nachricht nicht weiter zu leiten, wegen s.o. der Absatz zu "Für einen Empfänger E gilt:".

Fener ist noch zu sagen, dass der initiierenden Sender S1 die Ursache für S1 aus sich selbst heraus bestimmen kann (Rettungsfahrzeug benötigt Rettungsgasse), dass der initiale Auslöser aber auch von "außerhalb" kommen kann, z.B. von einer Zentrale, die einen speziellen Mobilfunkteilnehmer dessen Position ihr bekannt ist eine Aufforderung zu einer Broadcast Nachricht Point-to-Point z.B. via MSISDN schicken kann. Auch könnte eine solche Zentrale mehrere unterschiedliche S1 aufeinander abgestimmte Aufforderungen zu nahezu identischen oder unterschiedlichen N Nachrichten senden, um damit ein größeres Gebiet (oder mehrere spezielle Einfahrstellen in ein größeres Gebiet) schneller komplett versorgen zu können. Das "nahezu identisch" könnte sich z.B. nur auf den Unterschied bzgl. der Parameter Pos1 und R1 beziehen, die ja vom jeweiligen S1 bestimmt werden.

Die Anwendungsfälle bzw. beschriebenen Beispiele sind beispielsweise gültig für:

-- statische oder kinematische S1 Sender,
-- statische oder kinematische Empfänger $E_i$ bzw. Sender $S_i$,
-- veränderliches geographisch definiertes Versorgungs-Gebiet zur Informationsversorgung;
-- veränderliche sonstige Parameter in Broadcast Nachrichten N
-- örtlich auch außerhalb erdgebundener Positionen und unabhängig von Sendemasten von Mobilfunk Netzen nutzbar, gilt somit auch für Segelflieger, auf dem Meer oder im Gebirge.

Erfindungsgemäß sind die nachfolgenden Varianten ebenfalls möglich und bevorzugt:

-- 3D Versorgungsgebiete anstatt bisher nur 2D Gebiete;
-- Pk Polygon und zusätzlich mit Höhenbereich definieren; also geographische Volumenbereiche spezifizieren, was z. B. für Flughöhen von Drohnen oder Wolkenkratzer Hochhauskommunikation (nur Stockwerke 30 bis 50 zu versorgen) interessant ist;
-- $N_i$ Versendung auch wenn $(Pos_i, R_i)$ das bisher nicht abgedeckte Restgebiet nicht verringern wird;
-- bei U förmigem PK Gebiet Verlauf, dargestellt z. B. durch mehrere Pk, kann es Sinn machen, dass ein Sx eine Nachricht ohne Anreicherung sendet, weil es Pk kennt und erwarten kann, dass ein späterer Empfänger Ey dann das Restgebiet verkleinern könnte, wenn Ey/Sy z. B. in der Mitte der U Beine wäre;
-- ein initiales großes PK Gebiet, dass von unterschiedlichen Si aus z.B. den 4 Himmelsrichtungen angenähert wird und deren Nachrichten sich dann nach Innen (insb. inkl. durch Anreicherung) weiter verbreiten, können zwar nach einer Zeit das komplette PK Gebiet abdecken, aber vermutlich wird dann jedes der Viertel des z. B. Kreisgebietes PK am Ende von tg dann ca. 4 mal von einer anderen Nachrichtenwelle informiert werden;

-- Aber sofern noch die gleichen S in diesen Vierteln sich befinden und sich wenig bewegt haben, so könnten diese anhand der ID erkennen, dass ein Teil schon vor einiger Zeit informiert wurde, und den Teil können sie exakt berechnen. Somit würden sie eine Nachricht N nur angereichert weiterleiten, wenn es einen Nutzen hat für die Verkleinerung des Restgebietes oder bei der Erneuerung der Versorgungszeit tg, deren Aufdatierungs-Frequenz auch vorgegeben worden sein könnte; jedoch ist es vorab nie bekannt, welches Untergebiet von PK zu viele Nachrichten erhält und ob jemals das PK bis $t_g$ komplett informiert wird; der Grund ist die Kinematik und Anzahl von E und S.

Ferner können mehrere PK mit spezifischen $t_g$ bestimmt werden: Die erste N1 könnte auch mehrere PK enthalten, die unterschiedliche Parameter enthält z. B. für $t_g$; der Vorteil ist die höhere Differenzierung und z.T. weniger Nachrichten später; der Nachteil ist, dass N länger wird.

Ferner können gepufferten Nachrichten auch verbunden werden (merging): Merging/Vereinigung von Nachrichten Nu und Nv, die eine identische ID haben: Nu, Nv, ... Nw sind in $E_x$ empfangen worden, ohne dass bis jetzt eine N von Ex dazu weitergeleitet wurde, z. B. weil der Beitrag von Ex vor dem Zeitpunkt tx zur Verkleinerung des Restgebietes noch anwachsend war und man nicht zu viele N senden will. Die Vereinigung von Nu, Nv, ... Nw zur Nachricht Nx erfolgt durch Anreicherungen mit den (Pos,R) der ältesten N durch die neueren Ns, die nicht in der ältesten N enthalten sind und zusätzlich durch Anreicherung mit (Posx,Rx) zum Zeitpunkt tx. Aber die speziellen Parameter bezüglich der initialen S1 Nachricht, zum Beispiel tg, müssen vom letzten N des Senders S1 genommen werden.

Ferner ist es erfindungsgemäß vorteilhaft möglich, eine Protokollerweiterung dahingehend vorzusehen, dass eine weiteren ID als InfoType eingeführt wird; etwa InfoType=1 heißt Rettungsgasse In der Mitte einer 2-spurigen Straße, etwa eine Autobahn, frei machen.

Ferner ist es erfindungsgemäß vorteilhaft möglich, Ungenauigkeiten von Positionen und Gebietsgrenzen zu berücksichtigen: Zusätzliche Variable in der Nachricht definieren, die die Genauigkeit von geographischen Informationen angeben. Z.B. bei Pos auch Standardabweichung von Pos als 3D-Hyperellipsoid. Im Algorithmus kann dann für Restflächenbegrenzungen in E auch eine Standardabweichung berechnet werden und bei den Entscheidungen berücksichtigt werden.

**Patentansprüche**

1.    Verfahren zum Übermitteln eines Nachrichteninhalts mittels einer Mehrzahl von Broadcast-Nachrichten zur Abdeckung eines geographischen Gebiets (100), wobei ein Sender wenigstens eine initiale Broadcast-Nachricht überträgt, wobei der Nachrichteninhalt von dem Sender (20) an eine Mehrzahl von Empfängern (31, 32, 33) als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird, wobei der Sender (20) ein Funkabdeckungsgebiet (20') aufweist, innerhalb welchem ein Empfang von gesendeten Broadcast-Nachrichten durch die Empfänger (31, 32, 33) möglich ist, wobei das Verfahren zur Abdeckung des geographischen Gebiets (100) die nachfolgenden Schritte umfasst:

-- in einem ersten Schritt sendet der Sender (20) die initiale Broadcast-Nachricht umfassend den Nachrichteninhalt und eine initiale Zusatzinformation und es empfängt ein erster Empfänger (31, 32, 33) die initiale Broadcast-Nachricht, wobei die initiale Zusatzinformation wenigstens

-- eine Nachrichtenidentifikationsinformation,
-- eine Positionsinformation bezüglich des Senders (20),
-- eine Gebietsinformation zur Definition des geographischen Gebiets (100) und
-- eine Gültigkeitszeitinformation umfasst,

-- in einem nachfolgenden zweiten Schritt senden die Empfänger (31, 32, 33) - als weitere Sender - jeweils weitere Broadcast-Nachrichten, wobei die weiteren Broadcast-Nachrichten den Nachrichteninhalt und jeweils weitere Zusatzinformationen zur Abdeckung des geographischen Gebiet (100) umfassen, wobei die Empfänger (31, 32, 33) in einem ersten Teilschritt des zweiten Schritts anhand der empfangenen Gültigkeitszeitinformation prüfen, ob der Nachrichteninhalt der empfangenen Broadcast-Nachricht noch gültig ist, wobei wenigstens ein Teil der Empfänger (31, 32, 33) - in einem zweiten Teilschritt des zweiten Schritts und als weitere Sender agierend - jeweils weitere Broadcast-Nachrichten senden, sofern der Nachrichteninhalt der empfangenen Broadcast-Nachricht noch gültig ist,

wobei die Empfänger (31, 32, 33) vor der Durchführung des zweiten Teilschritts des zweiten Schritts zur Verringerung der Anzahl an Broadcast-Nachrichten eine Prüfung durchführen, ob durch eine erneute Aussendung der Broadcast-Nachricht ein Restgebiet des geographischen Gebiets (100) verkleinert wird, wobei das Restgebiet einem durch die Empfänger (31, 32, 33) detektierten oder bestimmten, noch nicht abgedeckten Teil des geographischen Gebiets (100) entspricht, wobei die Empfänger (31, 32, 33) den zweiten Teilschritt des zweiten Schritt erst durchführen, wenn ein Ergebnis der Prüfung vorliegt.

2. Verfahren nach Anspruch 1, **dadurch gekennzeichnet, dass** die Zusatzinformation zusätzlich wenigstens eine der nachfolgenden Informationen umfasst:

   -- eine Zählerinformation,
   -- eine Funkabdeckungsbereichsinformation, insbesondere eine Umkreisinformation, bezüglich des Senders (20),
   -- eine Sendezeitpunktinformation.

3. Verfahren nach Anspruch 1 oder 2, **dadurch gekennzeichnet, dass** die Empfänger (31, 32, 33) im ersten Teilschritt des zweiten Schritts anhand der Gebietsinformation und der Positionsinformation prüfen, welches Teilgebiet des geographischen Gebiets (100) bereits abgedeckt ist,
   wobei der im zweiten Teilschritt des zweiten Schritts als weitere Sender agierende Teil der Empfänger (31, 32, 33) jeweils weitere Broadcast-Nachrichten senden, sofern der Nachrichteninhalt der empfangenen Broadcast-Nachricht noch gültig ist und wenigstens ein noch nicht abgedecktes Teilgebiet des geographischen Gebiets (100) aufgrund des Funkabdeckungsbereichs des betreffenden, als weiterer Sender agierenden, Empfängers erreichbar ist.

4. Verfahren nach einem der vorhergehenden Ansprüchen, **dadurch gekennzeichnet, dass** die weiteren Zusatzinformationen der weiteren Broadcast-Nachrichten

   -- die Nachrichtenidentifikationsinformation,
   -- eine Positionsinformation bezüglich des als Sender agierenden Empfängers (31, 32, 33),
   -- die Gebietsinformation und
   -- die Gültigkeitszeitinformation

   umfassen,
   wobei die Zusatzinformation darüber hinaus insbesondere wenigstens eine der nachfolgenden Informationen umfasst:

   -- eine weitere Zählerinformation,
   -- eine Funkabdeckungsbereichsinformation, insbesondere eine Umkreisinformation, bezüglich des als Sender agierenden Empfängers (31, 32, 33),
   -- eine Sendezeitpunktinformation.

5. Verfahren nach einem der vorhergehenden Ansprüche, **dadurch gekennzeichnet, dass** während des zweiten Schritts der erste und zweite Teilschritt nacheinander mehrfach von unterschiedlichen Empfängern (31, 32, 33) durchgeführt werden, bis das geographische Gebiet (100) vollständig oder nahezu vollständig abgedeckt ist oder der Nachrichteninhalt der Broadcast-Nachricht nicht mehr gültig ist,
   wobei insbesondere ein Restgebiet betrachtet wird, wobei das Restgebiet dem durch die unterschiedlichen Empfänger (31, 32, 33) detektierten oder bestimmten, noch nicht abgedeckten geographischen Gebiet (100) entspricht.

6. Verfahren nach einem der vorhergehenden Ansprüche, **dadurch gekennzeichnet, dass** der betreffende Empfänger (31, 32, 33) die Prüfung, ob das Restgebiets durch eine erneute Aussendung der Broadcast-Nachricht verkleinert wird, wiederholt durchführt, insbesondere mit einer Wiederholrate von im Bereich von 0,1 bis 10 Hz, insbesondere von 1 Hz.

7. Verfahren nach einem der vorhergehenden Ansprüche, **dadurch gekennzeichnet, dass** der betreffende Empfänger (31, 32, 33) eine Mehrzahl von Broadcast-Nachrichten empfängt sowie prüft, ob die Mehrzahl von empfangenen Broadcast-Nachrichten eine identische Nachrichtenidentifikationsinformation aufweisen, wobei für den Fall einer positiven Prüfung die entsprechenden Broadcast-Nachricht vereinigt oder fusioniert werden.

8. Verfahren nach einem der vorhergehenden Ansprüche, **dadurch gekennzeichnet, dass** die Gebietsinformation zur Definition des geographischen Gebiets (100) eine Polygonkette, umfassend eine Mehrzahl an Punkten, die einen polygonalen geographischen Bereich definieren, ist oder umfasst oder eine Mehrzahl an Polygonketten ist oder umfasst, wobei insbesondere eine Polygonkette oder ein damit definiertes Polygon zusätzlich einen Höhenbereich definiert und somit einen geographischen Volumenbereich definiert.

9. Verfahren nach einem der vorhergehenden Ansprüche, **dadurch gekennzeichnet, dass** die initiale Zusatzinformation eine Mehrzahl an Gebietsinformationen und/oder eine Mehrzahl unterschiedlicher Gültigkeitszeitinformationen umfasst, wobei insbesondere jeder der Gebietsinformationen eine Gültigkeitszeitinformation zugeordnet ist.

10. System zum Übermitteln eines Nachrichteninhalts mittels einer Mehrzahl von Broadcast-Nachrichten zur Abdeckung eines geographischen Gebiets (100), wobei das System einen Sender (20) und eine Mehrzahl von Empfängern (31, 32, 33) aufweist, wobei das System dazu konfiguriert ist, die Schritte des Verfahrens nach einem der Ansprüche 1 bis 9 auszuführen.

11. Kommunikationseinrichtung, welche eingerichtet ist, sowohl als Sender (20) als auch als Empfänger (31, 32, 33) in einem System nach Anspruch 10 verwendet zu werden.

12. Computerprogramm umfassend Befehle, mit deren Hilfe die Schritte eines Verfahrens nach einem der Ansprüche 1 bis 9 durchführbar sind, wenn das Computerprogramm auf einer Kommunikationseinrichtung ausgeführt wird.

13. Computerlesbares Medium, vorgesehen zur Speicherung eines Computerprogramms, wobei das computerlesbare Medium das Computerprogramm nach Anspruch 12 aufweist.

14. Datenträgersignal, vorgesehen zur Übertragung eines Computerprogramms, wobei das Datenträgersignal das Computerprogramm nach Anspruch 12 auf eine Kommunikationseinrichtung überträgt.

**Claims**

1. Method for transmitting message content by means of a plurality of broadcast messages to cover a geographical area (100), wherein a transmitter transmits at least one initial broadcast message, wherein the message content is sent from the transmitter (20) to a plurality of receivers (31, 32, 33) as a broadcast message by means of D2D functionality, device-to-device functionality or a PC5 sidelink functionality, in particular using the Mode 4 functionality, wherein the transmitter (20) comprises a radio coverage area (20'), within which it is possible for the receivers (31, 32, 33) to receive sent broadcast messages, wherein the method for covering the geographical area (100) comprises the following steps:

   - in a first step, the transmitter (20) sends the initial broadcast message comprising the message content and initial additional information, and a first receiver (31, 32, 33) receives the initial broadcast message, wherein the initial additional information comprises at least the following:

      - message identification information,
      - positional information regarding the transmitter (20) ,
      - area information for defining the geographical area (100), and
      - validity time information

   - in an subsequent second step, the receivers (31, 32, 33) - as further transmitters - each send further broadcast messages, wherein the further broadcast messages comprise the message content and respective further additional information regarding the coverage of the geographical area (100), wherein the receivers (31, 32, 33) check, in a first sub-step of the second step, using the received validity time information, whether the message content of the received broadcast message is still valid, wherein at least some of the receivers (31, 32, 33) - in a second sub-step of the second step and acting as further transmitters - each send further broadcast messages provided that the message content of the received broadcast message is still valid,

   wherein in order to reduce the number of broadcast messages, the receivers (31, 32, 33) check, prior to performing the second sub-step of the second step, whether a remaining area of the geographical area (100) is reduced by the re-sending of the broadcast message, wherein the remaining area corresponds to a not-yet-covered part of the geographical area (100) detected or determined by the receivers (31, 32, 33), wherein the receivers (31, 32, 33) perform the second sub-step of the second step only when the check produces a result.

2. Method as claimed in claim 1, **characterised in that** the additional information additionally comprises at least one of the following types of information:

   - counter information,
   - radio coverage range information, in particular radius information, regarding the transmitter (20),
   - sending time information.

3. Method as claimed in claim 1 or 2, **characterised in that** the receivers (31, 32, 33) check, in the first sub-step of the second step, using the area information and the positional information, which partial area of the geographical area (100) is already covered,
   wherein those receivers (31, 32, 33) acting as further transmitters in the second sub-step of the second step each send further broadcast messages if the message content of the received broadcast message is still valid and at least one not-yet-covered partial area of the geographical area (100) can be reached owing to the radio coverage range of the relevant receiver acting as a further transmitter.

4. Method as claimed in any one of the preceding claims, **characterised in that** the further additional information of the further broadcast messages comprises:

   - the message identification information,
   - positional information regarding the receiver (31, 32, 33) acting as a transmitter,
   - the area information, and
   - the validity time information,

   wherein the additional information also comprises in particular at least one of the following types of information:

   - further counter information,
   - radio coverage range information, in particular radius information, regarding the receiver (31, 32, 33) acting as a transmitter,
   - sending time information.

5. Method as claimed in any one of the preceding claims, **characterised in that** during the second step, the first and second sub-steps are performed successively multiple times by different receivers (31, 32, 33) until the geographical area (100) is completely or almost completely covered or the message content of the broadcast message is no longer valid,

   wherein in particular a remaining area is considered,
   wherein the remaining area corresponds to the not-yet-covered geographical area (100) detected or determined by the different receivers (31, 32, 33).

6. Method as claimed in any one of the preceding claims, **characterised in that** the relevant receiver (31, 32, 33) repeatedly checks whether the remaining area is reduced by the re-sending of the broadcast message, in particular with a repetition rate in the range of 0.1 to 10 Hz, in particular 1 Hz.

7. Method as claimed in any one of the preceding claims, **characterised in that** the relevant receiver (31, 32, 33) receives a plurality of broadcast messages and checks whether the plurality of received broadcast messages have identical message identification information, wherein in the event of a positive check the corresponding broadcast messages are combined or merged.

8. Method as claimed in any one of the preceding claims, **characterised in that** the area information for defining the geographical area (100) is or comprises a polygonal chain, comprising a plurality of points which define a polygonal geographical range, or is or comprises a plurality of polygonal chains, wherein in particular a polygonal chain or a polygon defined thereby additionally defines a height range and thus a geographical volume range.

9. Method as claimed in any one of the preceding claims, **characterised in that** the initial additional information comprises a plurality of items of area information and/or a plurality of items of different validity time information, wherein in particular each of the items of area information is allocated an item of validity time information.

**10.** System for transmitting message content by means of a plurality of broadcast messages to cover a geographical area (100), wherein the system comprises a transmitter (20) and a plurality of receivers (31, 32, 33), wherein the system is configured to perform the steps of the method as claimed in any one of claims 1 to 9.

**11.** Communications device configured to be used as a transmitter (20) and also as a receiver (31, 32, 33) in a system as claimed in claim 10.

**12.** Computer program comprising instructions, by means of which the steps of a method as claimed in any one of claims 1 to 9 can be performed when the computer program is executed on a communications device.

**13.** Computer-readable medium provided for storing a computer program, wherein the computer-readable medium comprises the computer program as claimed in claim 12.

**14.** Data carrier signal provided for transmitting a computer program, wherein the data carrier signal transmits the computer program as claimed in claim 12 to a communications device.


**Revendications**

**1.** Procédé de transmission d'un contenu de message au moyen d'une pluralité de messages de diffusion permettant de couvrir une zone géographique (100), dans lequel un expéditeur transmet au moins un message de diffusion initial, dans lequel le contenu de message est envoyé par l'expéditeur (20) à une pluralité de destinataires (31, 32, 33) sous la forme d'un message de diffusion au moyen d'une fonctionnalité de dispositif à dispositif, D2D, ou d'une fonctionnalité PC5-Sidelink, en particulier en utilisant la fonctionnalité Mode 4, dans lequel l'expéditeur (20) a une zone de couverture radio (20') à l'intérieur de laquelle une réception, par l'expéditeur, de messages de diffusion envoyés est possible, dans lequel le procédé de couverture de la zone géographique (100) comprend les étapes suivantes :

- dans une première étape, l'expéditeur (20) envoie le message de diffusion initial comprenant le contenu de message et une information supplémentaire initiale et un premier destinataire (31, 32, 33) reçoit le message de diffusion initial, dans lequel l'information supplémentaire initiale comprend au moins

- une information d'identification de message,
- une information de position concernant l'expéditeur (20),
- une information de zone permettant la définition de la zone géographique (100) et
- une information de durée de validité,

- dans une seconde étape suivante, les destinataires (31, 32, 33) envoient respectivement - en tant qu'expéditeurs supplémentaires - des messages de diffusion supplémentaires, dans lequel les messages de diffusion supplémentaires comprennent le contenu de message et respectivement d'autres informations supplémentaires permettant de couvrir la zone géographique (100), dans lequel les destinataires (31, 32, 33) vérifient dans une première sous-étape de la seconde étape, au moyen de l'information de durée de validité reçue, si le contenu de message du message de diffusion reçu est encore valide, dans lequel au moins une partie des destinataires (31, 32, 33) - dans une seconde sous-étape de la seconde étape et agissant comme des expéditeurs supplémentaires - envoient respectivement des messages de diffusion supplémentaires, tant que le contenu de message du message de diffusion reçu est encore valide,

dans lequel les destinataires (31, 32, 33) effectuent, avant la réalisation de la seconde sous-étape de la seconde étape permettant de réduire le nombre de messages de diffusion, un contrôle pour déterminer si une zone restante de la zone géographique (100) est réduite en répétant l'envoi du message de diffusion, dans lequel la zone restante correspond à une partie non encore couverte de la zone géographique (100) détectée ou déterminée par les destinataires (31, 32, 33), dans lequel les destinataires (31, 32, 33) ne réalisent la seconde sous-étape de la seconde étape que s'il existe un résultat du contrôle.

**2.** Procédé selon la revendication 1, **caractérisé en ce que** l'information supplémentaire comprend de plus au moins l'une des informations suivantes :

- une information de compteur,

- une information de zone de couverture radio, en particulier une information de voisinage, concernant l'expéditeur (20),
- une information d'instant d'expédition.

3. Procédé selon la revendication 1 ou 2, **caractérisé en ce que** les expéditeurs (31, 32, 33) vérifient, à la première sous-étape de la seconde étape, au moyen de l'information de zone et de l'information de position, la sous-zone de la zone géographique (100) qui est déjà couverte,
dans lequel la partie des expéditeurs (31, 32, 33) agissant comme des expéditeurs supplémentaires à la seconde sous-étape de la seconde étape envoient respectivement d'autres messages de diffusion, tant que le contenu de message du message de diffusion reçu est encore valide et au moins une sous-zone non encore couverte de la zone géographique (100) est accessible sur la base de la zone de couverture radio du destinataire concerné agissant comme un expéditeur supplémentaire.

4. Procédé selon l'une des revendications précédentes, **caractérisé en ce que** les autres informations supplémentaires des autres messages de diffusion comprennent

- l'information d'identification de message,
- une information de position concernant le destinataire (31, 32, 33) agissant comme un expéditeur,
- l'information de zone et
- l'information de durée de validité,

dans lequel l'information supplémentaire comprend en outre en particulier au moins l'une des informations suivantes :

- une autre information de compteur,
- une information de zone de couverture radio, en particulier une information de voisinage, concernant le destinataire (31, 32, 33) agissant comme un expéditeur,
- une information d'instant d'expédition.

5. Procédé selon l'une des revendications précédentes, **caractérisé en ce que** pendant la seconde étape, les première et seconde sous-étapes sont réalisées successivement plusieurs fois par différents destinataires (31, 32, 33) jusqu'à ce que la zone géographique (100) soit entièrement ou pratiquement totalement couverte, ou que le contenu de message du message de diffusion ne soit plus valide,
dans lequel une zone restante est considérée en particulier, dans lequel la zone restante correspond à la zone géographique (100) non encore couverte, détectée ou déterminée par les différents expéditeurs (31, 32, 33).

6. Procédé selon l'une des revendications précédentes, **caractérisé en ce que** le destinataire (31, 32, 33) concerné effectue plusieurs fois la vérification pour déterminer si la zone restante est réduite en répétant un envoi du message de diffusion, en particulier à une fréquence de répétition dans la plage de 0,1 à 10 Hz, en particulier de 1Hz.

7. Procédé selon l'une des revendications précédentes, **caractérisé en ce que** le destinataire (31, 32, 33) concerné reçoit une pluralité de messages de diffusion et vérifient si les messages de la pluralité de messages de diffusion reçus comportent une information d'identification de message identique, dans lequel dans le cas d'un contrôle positif, les messages de diffusion correspondants sont associés ou fusionnés.

8. Procédé selon l'une des revendications précédentes, **caractérisé en ce que** l'information de zone permettant la définition de la zone géographique (100) est ou comprend une chaîne de polygone, comprenant une pluralité de points, qui définissent une zone géographique polygonale, ou est ou comprend une pluralité de chaînes de polygone, dans lequel en particulier une chaîne de polygone ou un polygone ainsi défini définit en plus une plage de hauteur et définit ainsi une plage de volume géographique.

9. Procédé selon l'une des revendications précédentes, **caractérisé en ce que** l'information supplémentaire initiale comprend une pluralité d'informations de zone et/ou une pluralité de différentes informations de durée de validité, dans lequel une information de durée de validité est en particulier associée à chacune des informations de zone.

10. Système pour transmettre un contenu de message au moyen d'une pluralité de messages de diffusion permettant de couvrir une zone géographique (100), dans lequel le système comporte un expéditeur (20) et une pluralité de destinataires (31, 32, 33), dans lequel le système est configuré pour mettre en œuvre les étapes du procédé selon l'une des revendications 1 à 9.

**11.** Dispositif de communication conçu pour être utilisé aussi bien comme expéditeur (20) que comme destinataire (31, 32, 33) dans un système selon la revendication 10.

**12.** Programme informatique comprenant des instructions au moyen desquelles les étapes d'un procédé selon l'une des revendications 1 à 9 peuvent être réalisées lorsque le programme informatique est exécuté sur un dispositif de communication.

**13.** Support lisible par ordinateur destiné à stocker un programme informatique, dans lequel le support lisible par ordinateur comporte le programme informatique selon la revendication 12.

**14.** Signal porteur de données destiné à transmettre un programme informatique, dans lequel le signal porteur de données transmet le programme informatique selon la revendication 12 à un dispositif de communication.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130099941 A1

**In der Beschreibung aufgeführte Nicht-Patentliteratur**

- **MAIHÖFER et al.** A survey of geocast routing proto-cols. *IEEE Commun. Surveys Tuts.,* 2004, vol. 6 (2), 32-42